# EUROPEAN PATENT APPLICATION

(11) **EP 3 173 919 A1**
(43) Date of publication of application: **31.05.2017**
(21) Application number: 16198914.0
(22) Date of filing: 15.11.2016
(51) Int. Cl.: G06F 3/0488, G06F 3/01, H04M 1/725, G06F 3/0346

(54) **METHOD AND APPARATUS FOR APPLICATION ICON MANAGEMENT**

(30) Priority: 30.11.2015 CN 201510857523
(71) Applicant: Xiaomi Inc., Beijing 100085 (CN)
(72) Inventor: ZHU, Ruixian, Beijing, Beijing 100085 (CN); WANG, Guangjian, Beijing, Beijing 100085 (CN); WANG, Shuo, Beijing, Beijing 100085 (CN)
(74) Representative: Sackin, Robert

(57) **Abstract**

The invention relates to a method and apparatus for application icon management. The method comprises: detecting, by a sensor, a moving status of a terminal in a lock screen state (S101); determining whether the moving status of the terminal in the lock screen state satisfies a preset status (S102); and lighting a designated application icon on a lock screen interface of the terminal, when the moving status satisfies the preset status (S103). With the above solution, the moving status of the terminal in the lock screen state is detected by a sensor, and the designated application icon may be lighted on the lock screen interface of the terminal when the moving status satisfies the preset status. As such, a user's needs are determined according to the moving status of the terminal and the needed application is automatically provided on the lock screen interface for the user. Accordingly, the user does not have to be bothered to look for the application and the operation process is simplified, so that the application on the terminal can be utilized conveniently, easily and rapidly and user experience is improved.

## Description

### TECHNICAL FIELD

The present invention generally relates to the field of terminal technology, and more particularly, to a method and apparatus for application icon management

### BACKGROUND

Currently, many smart terminals have built-in camera flashlights that can be used as torches. Such flashlights are fairly convenient for terminal users, especially in dark environments. Additionally, a theme interface for a terminal operating system may have shortcut icons provided on its lock screen for quickly launching corresponding functions, such as a dialing function. However, the shortcut icons are fixed and cannot be changed at will.

Some terminal operating systems themselves contain torch applications. When the torch application is launched, the camera flashlight is turned on. Moreover, advanced setting is applied: a shortcut button is set so that the torch can be turned on conveniently.

Typically, a user needs to use the torch in urgent situations. However, as an infrequently used application, the torch application is often buried in piles of applications and cannot be easily found. Therefore, the problem is that it is difficult to find the torch application in urgent situations. Although the torch may be turned on quickly by setting a shortcut for the torch application, not everyone knows the shortcut (few users read the manual completely) and not everybody can keep it in mind.

### SUMMARY

The present invention provides a method and apparatus for application icon management as follows.

According to a first aspect, there is provided a method for application icon management, comprising:
detecting, by a sensor, a moving status of a terminal in a lock screen state;
determining whether the moving status of the terminal in the lock screen state satisfies a preset status; and
lighting a designated application icon on a lock screen interface of the terminal, when the moving status satisfies the preset status.

In an embodiment, the lighting the designated application icon on the lock screen interface of the terminal comprises:
obtaining current environment parameter information of an environment in which the terminal is located; and
lighting the designated application icon on the lock screen interface of the terminal, when the current environment parameter information satisfies preset environment parameter information.

In an embodiment, the current environment parameter information comprises at least illumination intensity information and information on a distance between the terminal and an obstruction.

In an embodiment, the lighting the designated application icon on the lock screen interface of the terminal, when the current environment parameter information satisfies preset environment parameter information, comprises: when a current distance between the terminal and the obstruction is greater than or equal to a preset distance and a current illumination intensity is lower than a preset illumination intensity, lighting a torch application icon on the lock screen interface of the terminal.

In an embodiment, the lighting the designated application icon on the lock screen interface of the terminal, when the moving status satisfies the preset status, comprises: when it is detected that the terminal in the lock screen state has a moving speed greater than or equal to a preset moving speed, a moving acceleration greater than or equal to a preset moving acceleration, a moving frequency greater than or equal to a preset moving frequency, and/or a moving trajectory that meets a preset moving trajectory, lighting the designated application icon on the lock screen interface of the terminal.

In an embodiment, the method further comprises: when a number of received touches on the designated application icon is greater than or equal to a preset touch number and/or a frequency of the touches is greater than or equal to a preset touch frequency, launching the designated application.

In an embodiment, when the designated application icon is not lighted, the designated application icon is hidden on the lock screen interface of the terminal.

According to a second aspect, there is provided an apparatus for application icon management, comprising:
a detecting module configured to detect a moving status of a terminal in a lock screen state by a sensor;
a determining module configured to determine whether the moving status of the terminal in the lock screen state, which is detected by the detecting module, satisfies a preset status; and
a processing module configured to light a designated application icon on a lock screen interface of the terminal when the determining module determines that the moving status satisfies the preset status.

In an embodiment, the processing module comprises:
an obtaining submodule configured to obtain current environment parameter information of an environment in which the terminal is located; and
a first lighting submodule configured to light the designated application icon on the lock screen interface of the terminal when the current environment parameter information, which is obtained by the obtaining submodule, satisfies preset environment parameter information.

In an embodiment, the current environment parameter information comprises at least illumination intensity information and information on a distance between the terminal and an obstruction.

In an embodiment, the first lighting submodule is configured to: light a torch application icon on the lock screen interface of the terminal, when a current distance between the terminal and the obstruction is greater than or equal to a preset distance and a current illumination intensity is lower than a preset illumination intensity.

In an embodiment, the processing module comprises: a second lighting submodule configured to light the designated application icon on the lock screen interface of the terminal, when it is detected that the terminal in the lock screen state has a moving speed greater than or equal to a preset moving speed, a moving acceleration greater than or equal to a preset moving acceleration, a moving frequency greater than or equal to a preset moving frequency, and/or a moving trajectory that meets a preset moving trajectory.

In an embodiment, the apparatus further comprises: a launching module configured to launch the designated application, when a number of received touches on the designated application icon is greater than or equal to a preset touch number and/or a frequency of the touches is greater than or equal to a preset touch frequency.

In an embodiment, when the designated application icon is not lighted, the designated application icon is hidden on the lock screen interface of the terminal.

According to a third aspect, there is provided an apparatus for application icon management, comprising:
a processor; and
a memory for storing instructions executable by the processor,
wherein the processor is configured to:
   detect, by a sensor, a moving status of a terminal in a lock screen state;
   determine whether the moving status of the terminal in the lock screen state satisfies a preset status; and
   light a designated application icon on a lock screen interface of the terminal when the moving status satisfies the preset status.

In one particular embodiment, the steps of the method for application icon management are determined by computer program instructions.

Consequently, according to a fourth aspect, the invention is also directed to a computer program for executing the steps of a method for application icon management as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions according to the embodiments of the present invention may achieve the following beneficial effects.

With the above solutions, the moving status of the terminal in the lock screen state may be detected by the sensor, and the designated application icon may be lighted on the lock screen interface of the terminal when the moving status satisfies a preset status. As such, a user's needs are determined according to the moving status of the terminal, and a needed application is automatically provided on the lock screen interface for the user. Accordingly, the user does not have to be bothered to look for the application and the operation process is simplified, so that the application on the terminal can be utilized more conveniently, easily and rapidly and user experience is improved.

It is to be understood that both the foregoing general description and the following detailed description are exemplary and explanatory only and are not restrictive of the present invention.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
Fig. 1 is a flow chart showing a method for application icon management according to an exemplary embodiment.
Fig. 2 is a flow chart showing a step S103 of a method for application icon management according to an exemplary embodiment.
Fig. 3 is a flow chart showing another method for application icon management according to an exemplary embodiment.
Fig. 4 is a flow chart showing another method for application icon management according to an exemplary embodiment.
Fig. 5 is a flow chart showing a further method for application icon management according to an exemplary embodiment.
Fig. 6 is a block diagram of an apparatus for application icon management according to an exemplary embodiment.
Fig. 7 is a block diagram of a processing module of an apparatus for application icon management according to an exemplary embodiment.
Fig. 8 is a block diagram of another processing module of an apparatus for application icon management according to an exemplary embodiment.
Fig. 9 is a block diagram of another apparatus for application icon management according to an exemplary embodiment.
Fig. 10 is a block diagram showing an apparatus for application icon management according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of apparatus and methods consistent with aspects related to the present invention.

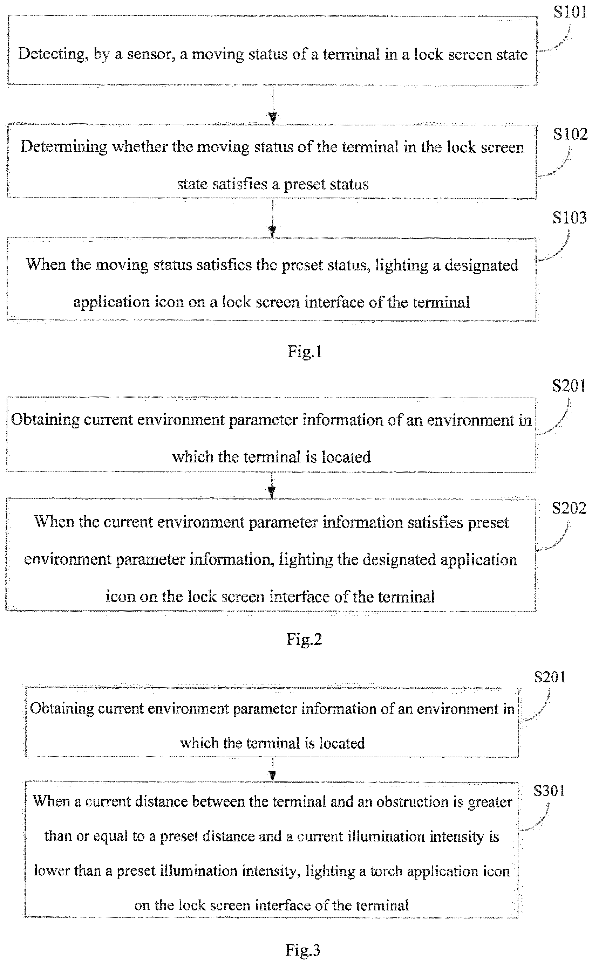

An embodiment of invention provides a method for application icon management, which may be used or implemented in a terminal device. As shown in Fig. 1, the method includes steps S101-S103.

In step S101, a moving status of a terminal in a lock screen state is detected by a sensor. The moving status may refer to such a status as whether the terminal is being shaken or whether the terminal is being tapped, etc.

In step S102, it is determined whether the moving status of the terminal in the lock screen state satisfies a preset status.

In step S103, when the moving status satisfies the preset status, a designated application icon is lighted on a lock screen interface of the terminal. The designated application icon may be an application icon set by the user or preset by the manufacturer on the terminal lock screen interface.

In this embodiment, the moving status of the terminal in the lock screen state can be detected by the sensor, and the designated application icon can be lighted on the lock screen interface of the terminal when the moving status satisfies the preset status. As such, a user's needs are determined according to the moving status of the terminal, and the needed application is automatically provided on the lock screen interface for the user. Accordingly, the user does not have to be bothered to look for the application and the operation process is simplified, so that the application on the terminal can be utilized more conveniently, easily and rapidly and user experience is improved.

In an embodiment, when the designated application icon is not lighted, the designated application icon may be displayed or hidden.

In the embodiment, when the designated application icon is not lighted, it may exist on the lock screen interface of the terminal but is hidden (that is, the application icon is invisible to the user), even if the lock screen interface is lighted by the user. Only when the moving status of the terminal satisfies a preset status, lighted is the designated application icon that was hidden, so as to facilitate the user's use of the designated application.

As shown in Fig. 2, in an embodiment, the above step S103 comprises steps S201-S202.

In step S201, current environment parameter information of an environment in which the terminal is located is obtained.

In step S202, when the current environment parameter information satisfies preset environment parameter information, the designated application icon is lighted on the lock screen interface of the terminal.

In this embodiment, the current environment parameter information of the environment in which the terminal is located may be obtained, and it is determined based on the environment parameter whether to light the designated application icon. Specifically, when the current environment parameter information satisfies the preset environment parameter information, the designated application icon is lighted.

In an embodiment, the current environment parameter information comprises at least illumination intensity information and information on a distance between the terminal and an obstruction.

In this embodiment, the illumination intensity information and the information on the distance between the terminal and the obstruction may be used to determine whether the current environment parameter information satisfies the preset environment parameter information. When the preset environment parameter is satisfied, the designated application icon is lighted.

As shown in Fig. 3, in an embodiment, the above step S202 comprises step S301.

In step S301, when the current distance between the terminal and the obstruction is greater than or equal to a preset distance and the current illumination intensity is lower than a preset illumination intensity, the designated application icon is lighted on the lock screen interface of the terminal.

In this embodiment, when the current distance between the terminal and the obstruction is greater than or equal to the preset distance (i.e. there is no obstruction around the terminal to block light) and the current illumination intensity is lower than the preset illumination intensity (i.e. the brightness around the terminal is rather low), it indicates that the user may need a torch. Then, the torch application icon that is hidden on the lock screen interface may be lighted, so as to make it convenient for the user to turn on the torch.

In the above embodiment, the torch application is taken as an example. It would be appreciated by those skilled in the art that the designated application icon may also be another application icon, such as a phone application icon, a message application icon, etc. Accordingly, the current environment parameter information may also be some other information, such as ambient noise information, temperature information, humidity information, etc.

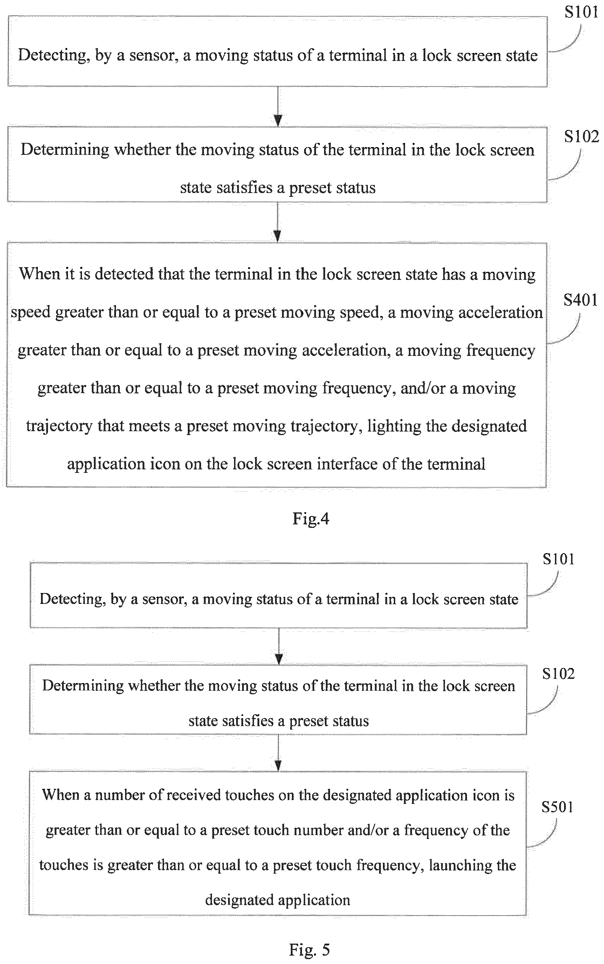

As shown in Fig. 4, in an embodiment, the above step S103 may also comprise step S401.

In step S401, when it is detected that the terminal in the lock screen state has a moving speed greater than or equal to a preset moving speed, a moving acceleration greater than or equal to a preset moving acceleration, a moving frequency greater than or equal to a preset moving frequency, and/or a moving trajectory that meets a preset moving trajectory, the designated application icon is lighted on the lock screen interface of the terminal.

In this embodiment, the preset status may comprise at least one of: the moving speed of the terminal in the lock screen state being greater than or equal to the preset moving speed, the moving acceleration being greater than or equal to the preset moving acceleration, the moving frequency being greater than or equal to the preset moving frequency, and the moving trajectory meeting the preset moving trajectory. For example, when a user rapidly and continuously shakes his terminal, its moving speed, moving acceleration and moving frequency are greater than respective preset values and the designated application may be lighted on the lock screen interface. Alternatively, the preset moving speed may be set as 50cm/s, and the designated application may be lighted on the lock screen interface of the terminal when the moving speed exceeds 50cm/s. Alternatively, the user or the manufacturer may preset a moving trajectory for the terminal, such as a circle, and the designated application may also be lighted on the lock screen interface when the user draws a circle in the air with his hand holding the terminal. Alternatively, the designated application may be lighted on the lock screen interface when the user consecutively taps on the screen of the terminal. As such, the terminal can determine a user's needs according to the moving status and automatically provide the needed application on the lock screen interface for the user. Accordingly, the user does not have to be bothered to look for the application and the operation process is simplified, so that the application on the terminal can be utilized more conveniently, easily and rapidly and user experience is improved.

As shown in Fig. 5, in an embodiment, the above method may further comprise step S501.

In step S501, when a number of received touches on the designated application icon is greater than or equal to a preset touch number and/or a frequency of the touches is greater than or equal to a preset touch frequency, the designated application is launched.

In this embodiment, when the number of received touches by the user on the designated application icon is greater than or equal to the preset touch number, the designated application may be launched. For example, the preset touch number may be set as 2, so that when the user double taps the designated application icon the designated application may be launched. Alternatively, when the frequency of touches by the user on the designated application icon is greater than the preset touch frequency, such as 2 times per second, the designated application may be launched. Of course, these two conditions may be applied in combination, that is, when the number of received touches on the designated application icon is greater than or equal to the preset touch number and the frequency of the touches is greater than or equal to the preset touch frequency, the designated application may be launched. In this manner, misoperation of the user can be avoided.

In the following, embodiments of apparatus according to the invention that can perform the methods described above will be described.

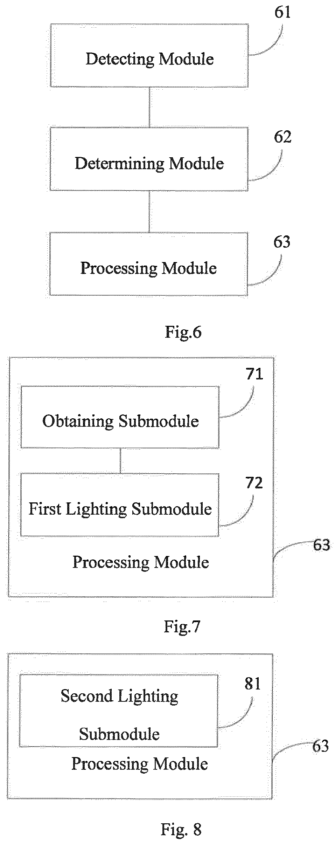

Fig. 6 is a block diagram of an apparatus for application icon management according to an exemplary embodiment. This apparatus may be implemented as a terminal device or a part thereof in form of software, hardware or a combination thereof. As shown in Fig. 6, the apparatus comprises:
a detecting module 61 configured to detect a moving status of a terminal in a lock screen state by a sensor, wherein the moving status may refer to such a status as whether the terminal is being shaken or whether the terminal is being tapped, etc.;
a determining module 62 configured to determine whether the moving status of the terminal in the lock screen state, which is detected by the detecting module 61, satisfies a preset status; and
a processing module 63 configured to light a designated application icon on a lock screen interface of the terminal when the determining module 62 determines that the moving status satisfies the preset status, wherein the designated application icon may be an application icon set by the user or preset by the manufacturer on the terminal lock screen interface.

In this embodiment, the moving status of the terminal in the lock screen state can be detected by the sensor, and the designated application icon can be lighted on the lock screen interface of the terminal when the moving status satisfies the preset status. As such, a user's needs are determined according to terminal moving status and the needed application is automatically provided on the lock screen interface for the user. Accordingly, the user does not have to be bothered to look for the application and the operation process is simplified, so that the application on the terminal can be utilized more conveniently, easily and rapidly and user experience is improved.

In an embodiment, when the designated application icon is not lighted, the designated application icon is hidden on the lock screen interface of the terminal.

In the embodiment, when the designated application icon is not lighted, it exists on the lock screen interface of the terminal but is hidden, that is, the application icon is invisible to the user. Only when the moving status of the terminal satisfies a preset status, lighted is the designated application icon that was hidden, so as to facilitate the user's use of the designated application.

As shown in Fig. 7, in an embodiment, the processing module 63 comprises:
an obtaining submodule 71 configured to obtain current environment parameter information of an environment in which the terminal is located;
a first lighting submodule 72 configured to light the designated application icon on the lock screen interface of the terminal when the current environment parameter information, which is obtained by the obtaining submodule, satisfies preset environment parameter information.

In this embodiment, the current environment parameter information of the environment in which the terminal is located may be obtained, and it is determined whether to light the designated application icon based on the environment parameter. Specifically, when the current environment parameter information satisfies the preset environment parameter information, the designated application icon is lighted.

In an embodiment, the current environment parameter information comprises at least illumination intensity information and information on a distance between the terminal and an obstruction.

In this embodiment, the illumination intensity information and the information on the distance between the terminal and the obstruction may be used to determine whether the current environment parameter information satisfies the preset environment parameter information. When the preset environment parameter is satisfied, the designated application icon is lighted.

In an embodiment, the first lighting submodule 72 is configured to: light a torch application icon on the lock screen interface of the terminal when a current distance between the terminal and the obstruction is greater than or equal to a preset distance and current illumination intensity is lower than a preset illumination intensity.

In this embodiment, when the current distance between the terminal and the obstruction is greater than or equal to the preset distance (i.e. there is no obstruction around the terminal to block light) and the current illumination intensity is lower than the preset illumination intensity (i.e. the brightness level around the terminal is rather low), it indicates that the user may need a torch. Then, the torch application icon that is hidden on the lock screen interface may be lighted, so as to make it convenient for the user to turn on the torch.

In the above embodiment, the torch application is taken as an example. It would be appreciated by those skilled in the art that the designated application icon may also be another application icon, such as a phone application icon, a message application icon, etc. Accordingly, the current environment parameter information may also be some other information, such as ambient noise information, temperature information, humidity information, etc.

As shown in Fig. 8, in an embodiment, the processing module 63 comprises:
a second lighting submodule 81 configured to light the designated application icon on the lock screen interface of the terminal when it is detected that the terminal in the lock screen state has a moving speed greater than or equal to a preset moving speed, a moving acceleration greater than or equal to a preset moving acceleration, a moving frequency greater than or equal to a preset moving frequency, and/or a moving trajectory that meets a preset moving trajectory.

In this embodiment, the preset status may comprise at least one of: the moving speed of the terminal in the lock screen state being greater than or equal to the preset moving speed, the moving acceleration being greater than or equal to the preset moving acceleration, the moving frequency being greater than or equal to the preset moving frequency, and the moving trajectory meeting a preset moving trajectory. For example, when a user rapidly shakes his terminal, its moving speed, moving acceleration and moving frequency are greater than respective preset values and the designated application may be lighted on the lock screen interface. Alternatively, the preset moving speed may be set as 50cm/s, and the designated application may be lighted on the lock screen interface of the terminal when the moving speed exceeds 50cm/s. Alternatively, the user or the manufacturer may preset a moving trajectory for the terminal, such as a circle, and the designated application may also be lighted on the lock screen interface when the user draws a circle in the air with his hand holding the terminal. As such, the terminal can determine a user's needs according to the moving status and automatically provide the needed application on the lock screen interface for the user. Accordingly, the user does not have to be bothered to look for the application and the operation process is simplified, so that the application on the terminal can be utilized more conveniently, easily and rapidly and user experience is improved.

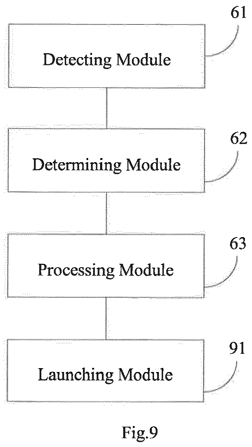

As shown in Fig. 9, in an embodiment, the above apparatus further comprises:
a launching module 91 configured to launch the designated application when a number of received touches on the designated application icon is greater than or equal to a preset touch number and/or a frequency of the touches is greater than or equal to a preset touch frequency.

In this embodiment, when the number of received touches by the user on the designated application icon is greater than or equal to the preset touch number, the designated application may be launched. For example, the preset touch number may be set as 2, so that when the user double taps the designated application icon the designated application may be launched. Alternatively, when the frequency of touches by the user on the designated application icon is greater than the preset touch frequency, such as 2 times per second, the designated application may be launched. Of course, these two conditions may be applied in combination, that is, when the number of received touches on the designated application icon is greater than or equal to the preset touch number and the frequency of the touches is greater than or equal to the preset touch frequency, the designated application may be launched. In this manner, misoperation of the user can be avoided.

According to a third aspect of the invention, an apparatus for application icon management is provided. The apparatus comprises:
a processor; and
a memory for storing instructions executable by the processor,
wherein the processor is configured to:
   detect, by a sensor, a moving status of a terminal in a lock screen state;
   determine whether the moving status of the terminal in the lock screen state satisfies a preset status; and
   light a designated application icon on a lock screen interface of the terminal when the moving status satisfies the preset status.

The above processor may be further configured such that the lighting the designated application icon on the lock screen interface of the terminal comprises:
obtaining current environment parameter information of an environment in which the terminal is located; and
lighting the designated application icon on the lock screen interface of the terminal, when the current environment parameter information satisfies preset environment parameter information.

The above processor may be further configured such that the current environment parameter information comprises at least illumination intensity information and information on a distance between the terminal and an obstruction.

The above processor may be further configured such that the lighting the designated application icon on the lock screen interface of the terminal, when the current environment parameter information satisfies the preset environment parameter information, comprises:
when a current distance between the terminal and the obstruction is greater than or equal to a preset distance and a current illumination intensity is lower than a preset illumination intensity, lighting a torch application icon on the lock screen interface of the terminal.

The above processor may be further configured such that the lighting the designated application icon on the lock screen interface of the terminal comprises, when the moving status satisfies the preset status, comprises: when it is detected that the terminal in the lock screen state has a moving speed greater than or equal to a preset moving speed, a moving acceleration greater than or equal to a preset moving acceleration, a moving frequency greater than or equal to a preset moving frequency, and/or a moving trajectory that meets a preset moving trajectory, lighting the designated application icon on the lock screen interface of the terminal.

The above processor may be further configured such that, when a number of received touches on the designated application icon is greater than or equal to a preset touch number and/or a frequency of the touches is greater than or equal to a preset touch frequency, the designated application is launched.

The above processor may be further configured such that, when the designated application icon is not lighted, the designated application icon is hidden on the lock screen interface of the terminal.

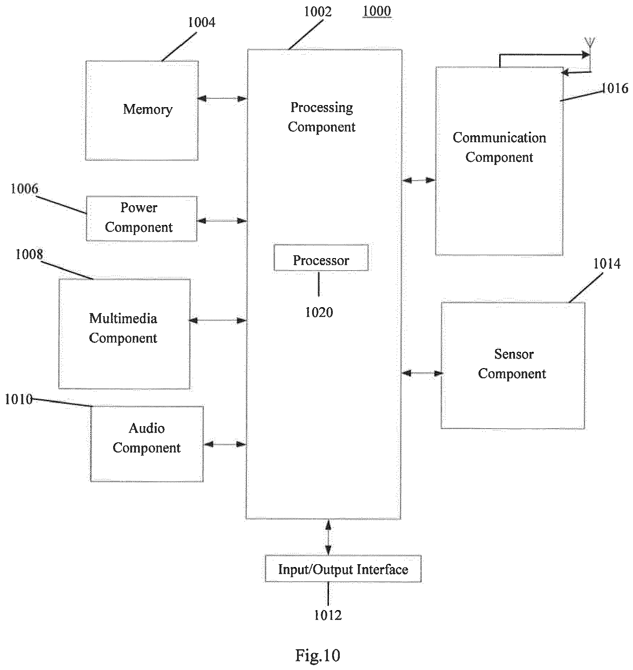

Fig. 10 is a block diagram of an apparatus 1000 for application icon management according to an exemplary embodiment, which may be used in a terminal device. For example, the apparatus 1000 may be a mobile phone, a computer, a digital broadcast terminal, a messaging device, a gaming console, a tablet, a medical device, exercise equipment, a personal digital assistant, and the like.

Referring to Fig. 10, the apparatus 1000 may include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 typically controls overall operations of the apparatus 1000, such as the operations associated with display, telephone calls, data communications, camera operations, and recording operations. The processing component 1002 may include one or more processors 1020 to execute instructions to perform all or part of the steps in the above described methods. Moreover, the processing component 1002 may include one or more modules which facilitate the interaction between the processing component 1002 and other components. For instance, the processing component 1002 may include a multimedia module to facilitate the interaction between the multimedia component 1008 and the processing component 1002.

The memory 1004 is configured to store various types of data to support the operation of the apparatus 1000. Examples of such data include instructions for any applications or methods operated on the apparatus 1000, contact data, phonebook data, messages, pictures, video, etc. The memory 1004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the apparatus 1000. The power component 1006 may include a power management system, one or more power sources, and any other components associated with the generation, management, and distribution of power in the apparatus 1000.

The multimedia component 1008 includes a screen providing an output interface between the apparatus 1000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1008 includes a front camera and/or a rear camera. The front camera and the rear camera may receive an external multimedia datum while the apparatus 1000 is in an operation mode, such as a photographing mode or a video mode. Each of the front camera and the rear camera may be a fixed optical lens system or have focus and optical zoom capability.

The audio component 1010 is configured to output and/or input audio signals. For example, the audio component 1010 includes a microphone ("MIC") configured to receive an external audio signal when the apparatus 1000 is in an operation mode, such as a call mode, a recording mode, and a voice recognition mode. The received audio signal may be further stored in the memory 1004 or transmitted via the communication component 1016. In some embodiments, the audio component 1010 further includes a speaker to output audio signals.

The I/O interface 1012 provides an interface between the processing component 1002 and peripheral interface modules, such as a keyboard, a click wheel, buttons, and the like. The buttons may include, but are not limited to, a home button, a volume button, a starting button, and a locking button.

The sensor component 1014 includes one or more sensors to provide status assessments of various aspects of the apparatus 1000. For instance, the sensor component 1014 may detect an open/closed status of the apparatus 1000, relative positioning of components, e.g., the display and the keypad, of the apparatus 1000, a change in position of the apparatus 1000 or a component of the apparatus 1000, a presence or absence of user contact with the apparatus 1000, an orientation or an acceleration/deceleration of the apparatus 1000, and a change in temperature of the apparatus 1000. The sensor component 1014 may include a proximity sensor configured to detect the presence of nearby objects without any physical contact. The sensor component 1014 may also include a light sensor, such as a CMOS or CCD image sensor, for use in imaging applications. In some embodiments, the sensor component 1014 may also include an accelerometer sensor, a gyroscope sensor, a magnetic sensor, a pressure sensor, or a temperature sensor.

The communication component 1016 is configured to facilitate communication, wired or wirelessly, between the apparatus 1000 and other devices. The apparatus 1000 can access a wireless network based on a communication standard, such as WiFi, 2G, or 3G, or a combination thereof. In one exemplary embodiment, the communication component 1016 receives a broadcast signal or broadcast associated information from an external broadcast management system via a broadcast channel. In one exemplary embodiment, the communication component 1016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1004, executable by the processor 1020 in the apparatus 1000, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium including instructions, which when executed by the processor of the apparatus 1000 cause the apparatus 1000 to perform the above-described method for application icon management. The method comprises: detecting, by a sensor, a moving status of a terminal in a lock screen state; determining whether the moving status of the terminal in the lock screen state satisfies a preset status; and lighting a designated application icon on a lock screen interface of the terminal, when the moving status satisfies the preset status.

In an embodiment, the lighting the designated application icon on the lock screen interface of the terminal comprises: obtaining current environment parameter information of an environment in which the terminal is located; and lighting the designated application icon on the lock screen interface of the terminal, when the current environment parameter information satisfies preset environment parameter information.

In an embodiment, the current environment parameter information comprises at least illumination intensity information and information on a distance between the terminal and an obstruction.

In an embodiment, the lighting the designated application icon on the lock screen interface of the terminal, when the current environment parameter information satisfies the preset environment parameter information, comprises: when a current distance between the terminal and the obstruction is greater than or equal to a preset distance and current illumination intensity is lower than a preset illumination intensity, lighting a torch application icon on the lock screen interface of the terminal.

In an embodiment, the lighting the designated application icon on the lock screen interface of the terminal, when the moving status satisfies the preset status, comprises: when it is detected that the terminal in the lock screen state has a moving speed greater than or equal to a preset moving speed, a moving acceleration greater than or equal to a preset moving acceleration, a moving frequency greater than or equal to a preset moving frequency, and/or a moving trajectory that meets a preset moving trajectory, lighting the designated application icon on the lock screen interface of the terminal.

In an embodiment, the method further comprises: when a number of received touches on the designated application icon is greater than or equal to a preset touch number and/or a frequency of the touches is greater than or equal to a preset touch frequency, launching the designated application.

In an embodiment, when the designated application icon is not lighted, the designated application icon is hidden on the lock screen interface of the terminal.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Other embodiments of the invention will be apparent to those skilled in the art from consideration of the specification and practice of the embodiments disclosed herein. This application is intended to cover any variations, uses, or adaptations of the invention following the general principles thereof and including such departures from the present invention as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for application icon management, **characterized by** comprising:
detecting, by a sensor, a moving status of a terminal in a lock screen state;
determining whether the moving status of the terminal in the lock screen state satisfies a preset status; and
lighting a designated application icon on a lock screen interface of the terminal, when the moving status satisfies the preset status.

2. The method of claim 1, **characterized in that** the lighting the designated application icon on the lock screen interface of the terminal comprises:
obtaining current environment parameter information of an environment in which the terminal is located; and
lighting the designated application icon on the lock screen interface of the terminal, when the current environment parameter information satisfies preset environment parameter information.

3. The method of claim 2, **characterized in that** the current environment parameter information comprises at least illumination intensity information and information on a distance between the terminal and an obstruction.

4. The method of claim 3, **characterized in that** the lighting the designated application icon on the lock screen interface of the terminal, when the current environment parameter information satisfies the preset environment parameter information, comprises:
when a current distance between the terminal and the obstruction is greater than or equal to a preset distance and a current illumination intensity is lower than a preset illumination intensity, lighting a torch application icon on the lock screen interface of the terminal.

5. The method of any preceding claim, **characterized in that** the lighting the designated application icon on the lock screen interface of the terminal, when the moving status satisfies the preset status, comprises:
when it is detected that the terminal in the lock screen state has a moving speed greater than or equal to a preset moving speed, a moving acceleration greater than or equal to a preset moving acceleration, a moving frequency greater than or equal to a preset moving frequency, and/or a moving trajectory that meets a preset moving trajectory, lighting the designated application icon on the lock screen interface of the terminal.

6. The method of any preceding claim, **characterized by** further comprising:
when a number of received touches on the designated application icon is greater than or equal to a preset touch number and/or a frequency of the touches is greater than or equal to a preset touch frequency, launching the designated application.

7. The method of any of claims 1-6, **characterized in that**
when the designated application icon is not lighted, the designated application icon is hidden on the lock screen interface of the terminal.

8. An apparatus for application icon management, **characterized by** comprising:
a detecting module configured to detect a moving status of a terminal in a lock screen state by a sensor;
a determining module configured to determine whether the moving status of the terminal in the lock screen state, which is detected by the detecting module, satisfies a preset status; and
a processing module configured to light a designated application icon on a lock screen interface of the terminal when the determining module determines that the moving status satisfies the preset status.

9. The apparatus of claim 8, **characterized in that** the processing module comprises:
an obtaining submodule configured to obtain current environment parameter information of an environment in which the terminal is located; and
a first lighting submodule configured to light the designated application icon on the lock screen interface of the terminal when the current environment parameter information, which is obtained by the obtaining submodule, satisfies preset environment parameter information.

10. The apparatus of claim 9, **characterized in that** the current environment parameter information comprises at least illumination intensity information and information on a distance between the terminal and an obstruction.

11. The apparatus of claim 10, **characterized in that** the first lighting submodule is configured to:
light a torch application icon on the lock screen interface of the terminal, when a current distance between the terminal and the obstruction is greater than or equal to a preset distance and a current illumination intensity is lower than a preset illumination intensity.

12. The apparatus of any of claims 8 to 11, **characterized in that** the processing module comprises:
a second lighting submodule configured to light the designated application icon on the lock screen interface of the terminal, when it is detected that the terminal in the lock screen state has a moving speed greater than or equal to a preset moving speed, a moving acceleration greater than or equal to a preset moving acceleration, a moving frequency greater than or equal to a preset moving frequency, and/or a moving trajectory that meets a preset moving trajectory.

13. The apparatus of any of claims 8 to 12, **characterized by** comprising:
a launching module configured to launch the designated application, when a number of received touches on the designated application icon is greater than or equal to a preset touch number and/or a frequency of the touches is greater than or equal to a preset touch frequency.

14. The apparatus of any of claims 8-13, **characterized in that**, when the designated application icon is not lighted, the designated application icon is hidden on the lock screen interface of the terminal.

15. An apparatus for application icon management, **characterized by** comprising:
a processor; and
a memory for storing instructions executable by the processor,
wherein the processor is configured to:
detect, by a sensor, a moving status of a terminal in a lock screen state;
determine whether the moving status of the terminal in the lock screen state satisfies a preset status; and
light a designated application icon on a lock screen interface of the terminal when the moving status satisfies the preset status.
